# EUROPÄISCHE PATENTSCHRIFT

(11) **EP 3 207 333 B1**
(45) Veröffentlichungstag und Bekanntmachung des Hinweises auf die Patenterteilung: **29.01.2020**
(21) Anmeldenummer: 15798308.1
(22) Anmeldetag: 16.10.2015
(51) Int. Cl.: G01B 11/26, B21D 5/00

(54) **BIEGEWINKEL-MESSVERFAHREN**
BENDING ANGLE MEASURING METHOD
PROCÉDÉ DE MESURE D'ANGLE DE CINTRAGE

(30) Priorität: 16.10.2014 AT 507442014
(43) Veröffentlichungstag der Anmeldung: 23.08.2017
(73) Patentinhaber: TRUMPF Maschinen Austria GmbH & Co. KG., 4061 Pasching (AT)
(72) Erfinder: LEEB, Sebastian, 4040 Linz (AT); LUSTIG, Stefan, 4020 Linz (AT)
(74) Vertreter: Burger, Hannes
(86) Internationale Anmeldenummer: PCT/AT2015/050257
(87) Internationale Veröffentlichungsnummer: WO 2016/058020

(56) Entgegenhaltungen:
- EP-A1- 1 102 032
- CN-A- 103 575 238
- DE-A1- 19 930 745
- JP-A- 2014 012 285
- US-A- 5 661 671

## Beschreibung

Die Erfindung betrifft ein Biegewinkel-Messverfahren an einer Biegemaschine sowie eine Biegemaschine mit einer Biegewinkel-Messvorrichtung.

Optische Biegewinkel-Messverfahren basieren zumeist darauf, dass von einer Beleuchtungsvorrichtung einer Biegewinkel-Messvorrichtung, ein Lichtmuster auf das umzuformende Blech gelenkt wird und dieses Lichtmuster von einer Bilderfassungsvorrichtung der Biegewinkel-Messvorrichtung erfasst wird. Zumeist sind die Bilderfassungsvorrichtung und die Beleuchtungsvorrichtung voneinander distanziert angeordnet, sodass zwischen dem, auf das Blech einfallenden Lichtstrahl und der Haupterfassungsrichtung der Bilderfassungsvorrichtung, ein Winkel gegeben ist. Durch diesen Versatz und den sich dadurch einstellenden Winkel ist gewährleistet, dass die Bilderfassungsvorrichtung das auf die Blechoberfläche projizierte Lichtmuster unter einem Winkel erfasst, sodass sich während der Durchführung der Biegeumformung, eine deutliche Änderung der Geometrie des projizierten Lichtmusters auf den sich aufbiegenden Blechschenkel ergeben wird.

Um mittels eines derartigen, optischen Verfahrens eine möglichst genaue Erfassung des sich einstellenden Biegewinkels zu erreichen, ist es von besonderem Vorteil, wenn die Erfassung des projizierten Lichtmusters möglichst nahe der Biegekante am Unterwerkzeug durchgeführt wird. Daher wird die Biegewinkel-Messvorrichtung rechtwinkelig zur Längserstreckung des Unterwerkzeugs von diesem distanziert angeordnet und die Beleuchtungsvorrichtung und Bilderfassungsvorrichtung in Richtung der Biegekante des Unterwerkzeugs verschwenkt. Eine derartige Anordnung ist beispielsweise aus der DE 20 2010 00 63 91 U1 bekannt. Nachteilig an einer solchen Ausbildung ist jedoch, dass die Ausrichtung der Biegewinkel-Messvorrichtung zumeist nur für ein Unterwerkzeug bzw. für einige wenige Unterwerkzeuge korrekt ist. Insbesondere ergibt sich durch die Breite der Unterwerkzeuge das Problem, dass der Punkt des Übergangs vom Unterwerkzeug auf das Blech aus dem Erfassungsbereich der Bilderfassungsvorrichtung wandern kann. Dieser Punkt entspricht jedoch zumeist der Biegekante und stellt jedenfalls den zu erfassenden, interessanten Bereich dar. Somit ist für unterschiedlich breite Unterwerkzeuge oftmals eine neue Verschwenkung der Biegewinkel-Messvorrichtung erforderlich.

US 5,661,671 A offenbart eine Biegewinkel-Erfassungsvorrichtung, bei der eine gerade Linie auf eine Oberfläche des Werkstückes projiziert wird und welche Oberfläche von einem Bilderfassungsmittel aufgenommen wird. Es ist vorgesehen, die Erfassungsvorrichtung derart zu positionieren, dass lediglich notwendige Linien erfasst werden, insbesondere jene Linie, die dem Biegewerkzeug benachbart ist.

Beispielsweise offenbaren auch die DE 199 30 745 A1, die JP 2014/012285 A und die CN 103 575 238 A eine Biegepresse, bei der die Bilderfassungsvorrichtung verschwenkt wird, um so eine Auflösungsverbesserung zu erreichen.

DE 199 30 745 A1 offenbart ein Verfahren und ein System zur Biegewinkelbestimmung, welches daraufhin ausgelegt ist, das Bild eines auf ein Werkstück projizierten Lichtstrahles aus mehreren Bildern exakt zu gewinnen. Dazu werden einem ersten Aufnahmebild, welches vor dem Biegen des Werkstückes aufgenommen wird und einem zweiten Aufnahmebild, welches aufgenommen wird, nachdem der Biegevorgang vollendet ist, Bildpunkten zugeteilt und diese spezifischen Gruppen zugewiesen. Durch Vergleich des ersten und zweiten Bildes lassen sich jene Bildabschnitte ermitteln die dem gebogenen Blech entsprechen und daraus der Biegewinkel ermitteln.

JP 2014/012285 A offenbart eine Biegewinkel-Messvorrichtung mit einer Kamera, welche Kamera eine Werkzeugidentifikation erfasst, um dadurch das verwendete Biegewerkzeug identifizieren zu können, und um Korrekturwerte auszulesen, um einen gewünschten Biegewinkel korrekt herstellen zu können.

Aus CN 103 575 238 A ist eine Biegewinkelmessvorrichtung bekannt, bei der eine Lichtlinie bzw. Lichtpunkte auf das Biegewerkzeug und das zu biegende Blech gerichtet werden. Aus den erfassten Lichtpunkten wird der sich einstellende Biegewinkel ermittelt.

Aus der DE 10 2007 056 827 B3 ist eine Vorrichtung bekannt, welche eine oder mehrere Biegewinkelmessgeräte umfasst, welche aufgrund von Konstruktionsdaten und/oder Werkstoffdaten relativ zum Unterwerkzeug positioniert werden. Zur Abdeckung unterschiedlicher Werkzeugbreiten ist offenbart, dass die Messvorrichtungen auf rechtwinkelig zur Längserstreckung des Unterwerkzeugs angeordneten Führungsschienen bewegt werden.

Ähnliche Ausführungen sind auch aus der EP 1 204 845 A1, der EP 1 102 032 A1 und der US 5,531,087 A bekannt.

Der Nachteil des Standes der Technik besteht nun darin, dass zur Anpassung der Biegewinkelmessung an unterschiedliche Unterwerkzeuge, die Biegewinkel-Messvorrichtung in ihrer verschwenkten Ausrichtung in Bezug zum Unterwerkzeug geändert werden muss. Eine derartige Änderung birgt jedoch stets die Gefahr, dass dadurch auch die Kalibrierung bzw. Referenzierung der Biegewinkel-Messvorrichtung in Bezug zum Unterwerkzeug unbeabsichtigt verstellt werden kann und somit die Gefahr einer Falschmessung des Biegewinkels gegeben ist.

Die Aufgabe der Erfindung liegt also darin ein Biegewinkel-Messverfahren zu schaffen, welches für eine Vielzahl unterschiedlich breiter Unterwerkzeuge einsetzbar ist und die Nachteile hinsichtlich einer Dejustage bei der Anpassung an unterschiedliche Unterwerkzeuge vermeidet.

Die Aufgabe der Erfindung wird durch ein Biegewinkel-Messverfahren an einer Biegemaschine gelöst. Bei der Biegemaschine handelt es sich insbesondere um eine Biegepresse oder Schwenkbiegemaschine, wobei die Biegemaschine eine Biegewerkzeuganordnung aus zumindest einem Ober- und einem Unterwerkzeug aufweist. Zur Durchführung der Biegeumformung wird ein umzuformendes Bleche in die Biegewerkzeuganordnung eingelegt. Von einer Beleuchtungsvorrichtung einer Biegewinkel-Messvorrichtung wird ein Lichtmuster auf einen Abschnitt abgegeben, wobei der Abschnitt einteilig ist und einen Teilbereich auf einer Seitenfläche des Unterwerkzeugs und des eingelegten Blechs umfasst. Von einer Bilderfassungsvorrichtung der Biegewinkel-Messvorrichtung wird das Lichtmuster am Unterwerkzeug und am Blech erfasst und von einem Analysemodul ein Biegewinkel aus dem erfassten Lichtmuster ermittelt. Dabei wird ein Übergangsabschnitt zwischen Unterwerkzeug und Blech ermittelt, und ferner, basierend auf dem Übergangsabschnitt, ein Teil-Erfassungsbereich im Erfassungsbereich der Bilderfassungsvorrichtung ermittelt. Anschließend wird der Teil-Erfassungsbereich von der als hoch-auflösende Kamera ausgebildeten Bilderfassungsvorrichtung, mit einer Auflösung im Teil-Erfassungsbereich von zumindest 500ppi erfasst und während der Durchführung der Biegeumformung, der sich aktuell einstellende Biegewinkel ermittelt. Der Biegewinkel wird dabei aus der durch Reduktion des erfassten Abbildes auf den Teil-Erfassungsbereich reduzierten, vom Analysemodul zu verarbeitenden Datenmenge ermittelt.

Das gegenständliche Verfahren kann sowohl für Biegepressen, als auch für Schwenkbiegemaschinen verwendet werden. Auf die spezifischen konstruktiven Details dieser beiden Ausführungen von Biegemaschinen wird hierin nicht weiter eingegangen. Unter der Biegewerkzeuganordnung werden jene Elemente der Biegemaschine verstanden, die unmittelbar am Blech die Biegeumformung durchführen. Zumeist wird ein Werkzeug der Biegewerkzeuganordnung in Relation zur Biegemaschine in Ruhe sein, und ein Werkzeug wird, von einem Antriebsmittel angetrieben, die Biegeumformung durchführen. In Anlehnung an die Biegewerkzeuganordnung einer Biegepresse wird das feststehende Werkzeug als Unterwerkzeug bezeichnet.

Unter dem einteiligen, beleuchteten Abschnitt wird jener Bereich verstanden, in welchen von der Beleuchtungsvorrichtung das Lichtmuster abgegeben wird. Dieser Bereich ist derart ausgebildet, dass sich das Lichtmuster auf das Unterwerkzeug und das Blech erstreckt, insbesondere jedoch über den Übergang vom Unterwerkzeug zum Blech.

Mit dieser Ausführung ist gewährleistet, dass mit nur einer Bilderfassungsvorrichtung und insbesondere ohne diese verschwenken zu müssen, der Biegewinkel für eine Vielzahl möglicher Biegewerkzeuganordnungen korrekt und genau erfasst werden kann.

Nach einer Weiterbildung wird der Übergangsabschnitt aus dem erfassten Lichtmuster ermittelt. Diese Weiterbildung hat den Vorteil, dass das gegenständliche Verfahren für jede Biegemaschine verwendbar ist, und insbesondere unabhängig von der Kenntnis der verwendeten Werkzeuggeometrie wird. Die äußere Werkzeuggeometrie, insbesondere der Übergang vom Werkzeugkörper auf das Blech, wird nach der gegenständlichen Ausführung bei Bedarf ermittelt.

Von Vorteil ist diesbezüglich eine Weiterbildung, nach der von der Beleuchtungsvorrichtung eine Lichtlinie abgegeben wird. Eine Lichtlinie zeichnet sich insbesondere durch eine klar definierte Geometrie und somit eindeutige Erkennbarkeit aus. Auch kann durch entsprechende Wahl einer hohen Lichtstärke, ein besonders guter Kontrast zur Umgebung erreicht werden, was die Erkennbarkeit und somit die Zuverlässigkeit der Auswertung verbessert.

Nach einer Weiterbildung ist auch vorgesehen, dass der Übergangsabschnitt durch Finden einer Unstetigkeit der Geometrie im erfassten Lichtmuster ermittelt wird. Das Lichtmuster wird derart ausgebildet sein, das der Übergang vom Unterwerkzeug auf das Blech zu einer deutlichen und somit gut erkennbaren Störung der Geometrie des Lichtmusters führt. Bevorzugt wird diese Analyse durch das Analysemodul durchgeführt. Wird gemäß einer möglichen Weiterbildung eine Lichtline als Lichtmuster abgegeben, lässt sich der Übergang als Knick im erfassten Abbild der Geraden erkennen.

Eine Weiterbildung besteht auch darin, dass der Übergangsabschnitt basierend auf einer hinterlegten oder ermittelten Kennung des Unterwerkzeugs ermittelt wird. Dies hat den Vorteil, dass mit dieser Kennung die werkzeugspezifischen Kenndaten zugreifbar sind und somit der Übergangsabschnitt direkt zur Verfügung steht. Beispielsweise kann die Kennung, bzw. können die mit der Kennung verknüpften Werkzeug-Kenndaten, in einem Speichermittel der Maschinensteuerung hinterlegt sein.

Von Vorteil ist dahingehend eine Weiterbildung, nach der eine am Unterwerkzeug angebrachte Werkzeugkennung von der Bilderfassungsvorrichtung ausgelesen wird. Die Werkzeugkennung kann bspw. als 1D- oder 2D-Code ausgeführt sein. Die Werkzeugkennung kann dahingehend ausgebildet sein, dass über diese Kennung eine Verknüpfung mit den spezifischen Werkzeugkenndaten gegeben ist. Es ist jedoch auch möglich, dass diese Kennung selbst die Werkzeugkenndaten enthält, so dass der Übergangsabschnitt und sich damit der Teil-Erfassungsbereich unmittelbar festlegen lässt.

Nach einer Weiterbildung ist vorgesehen, dass der Teil-Erfassungsbereich hoch-aufgelöst erfasst wird. Dies hat den Vorteil, dass nach Bestimmung des Teil-Erfassungsbereichs, der ja meist deutlich kleiner als der Erfassungsbereich der Bilderfassungsvorrichtung sein wird, dieser Teilbereich dennoch ausreichend genau ausgelesen werden kann. Bevorzugt wird eine Bilderfassungsvorrichtung verwendet, die im Teil-Erfassungsbereich eine Auflösung von zumindest 500ppi aufweist. In einer bevorzugten Ausführung hat der Teil-Erfassungsbereich am Blech eine physische Größe von 20x20mm, wobei dieser Bereich mit 400x400 pixel erfasst wird.

Eine Weiterbildung besteht auch darin, dass der Teil-Erfassungsbereich so gebildet wird, dass der Übergangsabschnitt im Randbereich des Teil-Erfassungsbereichs liegt. Da zur Bestimmung des Biegewinkels jener Abschnitt des erfassten Lichtmusters von Bedeutung ist, der vom Blech bis zum Übergangsabschnitt herrührt, hat diese Weiterbildung den Vorteil, dass ein größerer Bereich zur Bestimmung des Biegewinkels zur Verfügung steht, ohne des Teil-Erfassungsbereich unnötig zu vergrößern.

Nach einer Weiterbildung ist auch vorgesehen, dass die Biegewinkel-Messvorrichtung längs des Unterwerkzeugs verschoben wird. Diese Ausbildung hat den Vorteil, dass dadurch die Biegewinkel-Messvorrichtung in dem Bereich der Biegewerkzeuganordnung positioniert werden kann, in dem der sich ausbildende Biegewinkel zu bestimmen ist. Ein weiterer Vorteil liegt auch darin, dass die Biegewinkel-Messvorrichtung während des Einlegevorgangs des Bleches in die Biegewerkzeuganordnung aus dem Arbeitsbereich bewegt werden kann. Somit ist ein Schutz vor einer Beschädigung durch den Manipulationsvorgang mit dem umzuformenden Blech möglich. Insbesondere von Vorteil ist jedoch, dass diese Verschiebung die Ausrichtung der Biegewinkel-Messvorrichtung in Relation zum Unterwerkzeug und zum Übergangsabschnitt nicht ändert.

Die Aufgabe der Erfindung wird auch durch eine Biegemaschine, insbesondere Biegepresse oder Schwenkbiegemaschine gelöst, wobei die Biegemaschine eine Biegewerkzeuganordnung aufweist, welche Biegewerkzeuganordnung zumindest ein Ober- und ein Unterwerkzeug umfasst. Ferner umfasst die Biegemaschine eine Biegewinkel-Messvorrichtung, wobei die Biegewinkel-Messvorrichtung eine Beleuchtungsvorrichtung, eine Bilderfassungsvorrichtung und ein Analysemodul umfasst, wobei die Bilderfassungsvorrichtung zur Erfassung des von der Beleuchtungsvorrichtung auf das Unterwerkzeug und auf das umzuformende Blech abgegebenen Lichtmusters ausgebildet ist und das Analysemodul zur Ermittlung eines Biegewinkels aus dem erfassten Lichtmuster ausgebildet ist. Die Bilderfassungsvorrichtung ist dabei als hoch-auflösende Kamera, mit einer Auflösung in einem Teil-Erfassungsbereich von zumindest 500ppi, ausgebildet und das Analysemodul ist zur Verarbeitung einer durch Reduktion des erfassten Abbildes auf den Teil-Erfassungsbereich reduzierten Datenmenge ausgebildet.

Somit ist gewährleistet, dass der gesamte Arbeitsbereich, der mit den unterschiedlichen Unterwerkzeugen abgedeckt werden kann, mit nur einer Bilderfassungsvorrichtung abgedeckt werden kann, ohne dass der Erfassungsbereich geschwenkt werden muss.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegemaschine mit einem Unterwerkzeug einer ersten Breite, zur Veranschaulichung des gegenständlichen Verfahrens;
- Fig. 2: eine Biegemaschine mit einem Unterwerkzeug einer zweiten Breite, zur Veranschaulichung des gegenständlichen Verfahrens;
- Fig. 3: eine Biegemaschine in perspektivischer Darstellung, zur Veranschaulichung des gegenständlichen Verfahrens;
- Fig. 4: a) und b) Die Ermittlung der Teil-Erfassungsbereiche aus dem gesamten Erfassungsbereich für unterschiedlich breite Unterwerkzeuge.

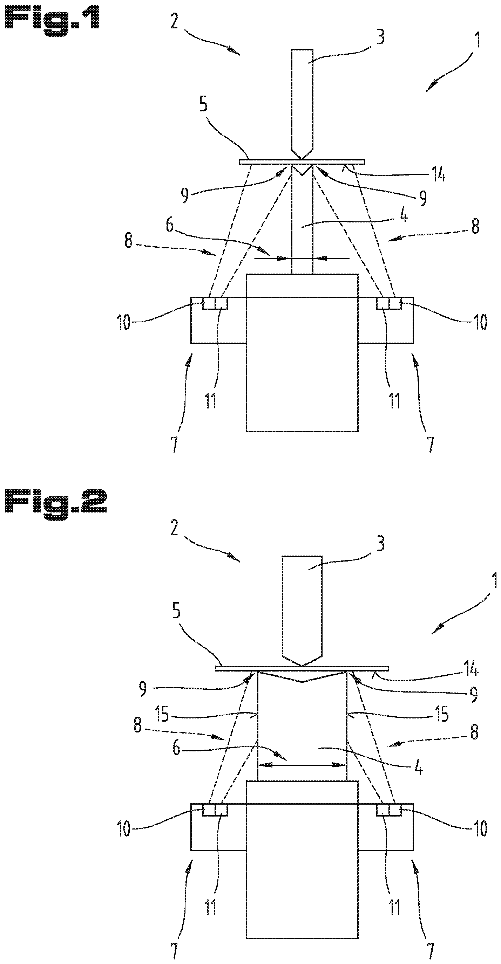

Fig. 1 zeigt einen Teil einer Biegemaschine 1 mit einer Biegewerkzeuganordnung 2, welche Biegewerkzeuganordnung 2 zumindest ein Oberwerkzeug 3 und Unterwerkzeug 4 aufweist. Die weiteren Komponenten der Biegemaschine 1, insbesondere der Maschinenrahmen und die Antriebsmittel zur Verstellung der Biegewerkzeuganordnung 2 und somit zur Durchführung der Biegeumformung, werden nicht dargestellt, da sie für die Beschreibung des gegenständlichen Verfahrens nicht von Bedeutung sind.

Bei der Vorbereitung der Biegeumformung wird ein umzuformendes Blech 5 in die Biegewerkzeuganordnung 2 eingelegt. Im dargestellten Fall ist in der Biegemaschine 1 ein Unterwerkzeug 4 mit der kleinsten möglichen Breite 6 angeordnet, was einen ersten Extremfall für die Ausrichtung der Biegewinkel-Messvorrichtung 7 darstellt. Das andere Extrem, mit dem breitest möglichen Unterwerkzeug, ist in Fig. 2 darstellt und beschrieben.

In dieser Konfiguration der Biegewerkzeuganordnung 2 muss gewährleistet sein, dass der Erfassungsbereich 8 jedenfalls den Übergangsabschnitt 9 zwischen Unterwerkzeug 4 und Blech 5 im Erfassungsbereich 8 der Bilderfassungsvorrichtung 10 liegt. Gemäß dem gegenständlichen Verfahren wird der Übergangsabschnitt 9 zwischen Unterwerkzeug 4 und Blech 5 ermittelt, und basierend auf diesem Übergangsabschnitt 9, ein Teil-Erfassungsbereich im Erfassungsbereich 8 der Bilderfassungsvorrichtung 10 ermittelt.

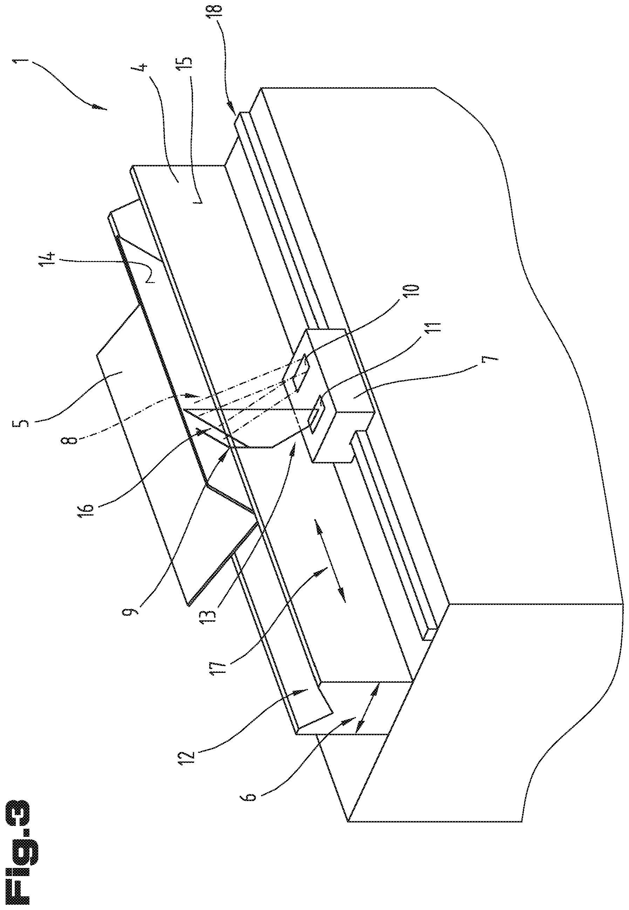

In den Figuren 1 und 2 ist eine vereinfachte Form des Unterwerkzeugs, insbesondere des Übergangsabschnitts 9, dargestellt. Der Übergangsabschnitt 9 wird nicht völlig an der äußeren Kante des Unterwerkzeugs 4 angeordnet sein, sondern etwas zur Biegeausnehmung des Werkzeugs versetzt, wie dies in Fig. 3 erkennbar ist. Da während des Biegevorgangs das Blech an dieser Kante der Biegeausnehmung anliegt, ist es von Bedeutung, wenn dieser Übergangsabschnitt 9 von der Biegewinkel-Messvorrichtung 7 gut und hoch-aufgelöst erfasst werden kann.

Fig. 2 zeigt die Situation, wenn ein Unterwerkzeug 4 mit der größten möglichen Breite 6 in der Biegewerkzeuganordnung 2 verwendet wird. Auch in diesem Fall ist der Erfassungsbereich 8 der Bilderfassungsvorrichtung 10 der Biegewinkel-Messvorrichtung 7 groß genug, um sowohl das Unterwerkzeug 4, als auch das in der Biegewerkzeuganordnung 2 angeordnete Blech 5 zu erfassen, insbesondere den Übergangsabschnitt 9 zwischen Unterwerkzeug 4 und Blech 5.

Fig. 3 zeigt eine perspektivische Darstellung des Unterwerkzeugs 4, welches in der Biegemaschine 1 angeordnet ist. Das Unterwerkzeug 4 weist eine V-förmige Biegeausnehmung 12 auf, in welche das Blech 5 vom nicht dargestellten Oberwerkzeug gedrückt wurde. Durch diese Krafteinwirkung auf das Blech 5 kommt es zur Umformung, sodass sich das Blech 5 gemäß der durch die Biegeausnehmung 12 vorgegebenen Form, insbesondere die Öffnungsweite der Biegeausnehmung, aufbiegen wird. Gemäß dem gegenständlichen Verfahren wird von einer Beleuchtungsvorrichtung 11 der Biegewinkel-Messvorrichtung 7 ein Lichtmuster 13 auf einen Abschnitt auf der Unterseite 14 des Bleches 5 und auch auf einen Abschnitt auf der Seitenwand 15 des Unterwerkzeugs 4 abgegeben. Gemäß einer bevorzugten Ausführung ist das Lichtmuster 13 durch eine Lichtlinie 16 gebildet, welche Lichtlinie 16 auf der Seitenwand 15 des Unterwerkzeugs 4 und auf der Unterseite 14 des Bleches 5 als Linie deutlich zu erkennen ist.

Nach der gegenständlichen Ausführung ist nun vorgesehen, dass der Erfassungsbereich 8 der Bilderfassungsvorrichtung 10 groß genug ist, um alle mögliche unterschiedlichen Breiten 6 des Unterwerkzeugs 4, das auf das Unterwerkzeug 4 und das Blech 5 projiziert Lichtmuster 13 zu erfassen. Somit ist es möglich, jedes für diese Biegemaschine 1 verwendbare Unterwerkzeug 4 bzw. jede verwendbare Biegewerkzeuganordnung 2 einzusetzen, ohne die Biegewinkel-Messvorrichtung 7 auf das aktuelle Unterwerkzeug 4 kalibrieren zu müssen. Insbesondere ist es somit nicht erforderlich, die Biegewinkel-Messvorrichtung 7 in Relation zum Unterwerkzeug 4 um eine Längsrichtung 17 des Unterwerkzeugs 4 zu verschwenken. Der für die Biegewinkelbestimmung relevante Übergangsabschnitt 9 liegt somit immer im Erfassungsbereich 8.

Nach einer Weiterbildung ist auch vorgesehen, dass die Biegewinkel-Messvorrichtung 7 in Längsrichtung 17 des Unterwerkzeugs 4 verschoben werden kann. Mit dieser Weiterbildung ist es möglich, den aktuellen Biegewinkel an mehreren Positionen längs des Bleches 5 zu bestimmen. Dies hat insbesondere dann den Vorteil, wenn ein sehr langes Blech gebogen wird und längs des Bleches die Gefahr einer ungleichmäßigen Biegung entsteht. Die Verschiebbarkeit wird beispielsweise dadurch erreicht, dass die Biegewinkel-Messvorrichtung 7 entlang einer Führungsvorrichtung 18 bewegbar ist, wobei die Bewegung bevorzugt mittels eines Antriebsmittels erfolgt.

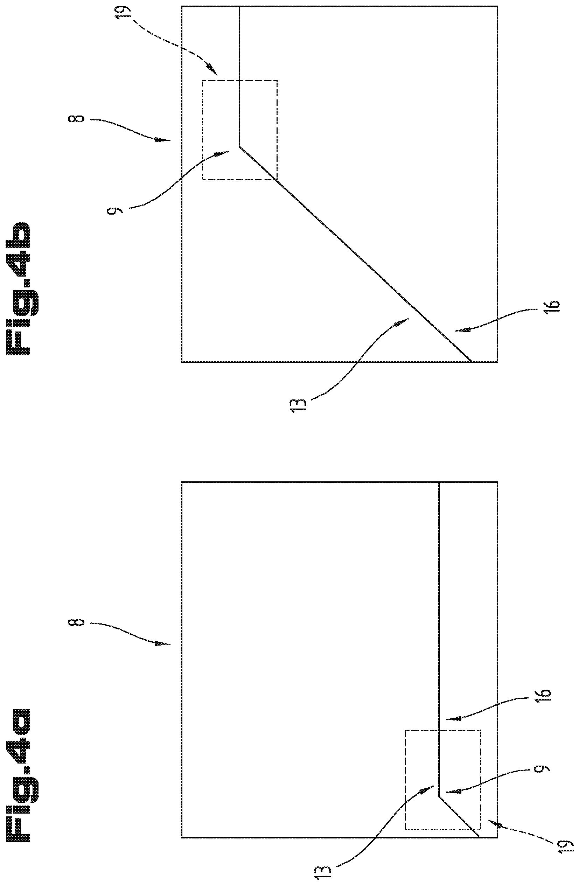

Die Fig. 4a und 4b zeigen wie aus dem Erfassungsbereich der Bilderfassungsvorrichtung der Teil-Erfassungsbereich gebildet wird.

Fig. 4a repräsentiert dabei die Situation aus Fig. 1, Fig. 4b repräsentiert die Situation aus Fig. 2. In Fig. 4 ist jeweils der gesamte Erfassungsbereich 8 der Bilderfassungsvorrichtung dargestellt, wie dieser von der beispielsweise als CCD-Kamera ausgebildeten Bilderfassungsvorrichtung aufgenommen wird. Von der Beleuchtungsvorrichtung wird ein Lichtmuster, bevorzugt eine Lichtlinie, auf das Unterwerkzeug und das Blech abgegeben. In Fig. 3 ist erkennbar, dass zwischen der Beleuchtungsvorrichtung 11 und der Bilderfassungsvorrichtung 10 ein Versatz besteht, sodass der Erfassungsbereich der Bilderfassungsvorrichtung 10 die auf das Blech 5 projizierte Lichtlinie 16 unter einem Winkel gegenüber der Projektionsrichtung des Lichtmusters 13 erfasst. Aufgrund dieses Versatzes und der angewinkelten Bilderfassung, ist der für das gegenständliche Verfahren interessante Übergangsabschnitt 9 als Knick im erfassten Lichtmuster 13, 16 erkennbar. Diese Situation ist nun in den Fig. 4a und 4b dargestellt. In den Abbildungen entspricht der waagrechte Teil der Lichtlinie 16 der Projektion der Lichtlinie auf die Unterseite 14 des Blechs, der ansteigende Teil der Lichtlinie 16 entspricht der Projektion des Lichtmusters auf die Seitenwand 15 des Unterwerkzeugs 4.

Bei Verwendung eines Unterwerkzeugs 4 mit geringer Breite 6 wird dieser Übergangsabschnitt 9 an einer anderen Stelle im Erfassungsbereich 8 liegen, als dies bei einem breiten Unterwerkzeug der Fall ist.

Nach dem gegenständlichen Verfahren ist nun vorgesehen, dass, basierend auf dem Übergangsabschnitt 9, ein Teil-Erfassungsbereich 19 im Erfassungsbereich 8 der Bilderfassungsvorrichtung 10 gebildet wird. Für die korrekte und zuverlässige Bestimmung des Biegewinkels während der Durchführung der Biegeumformung ist es von Bedeutung, dass der Bereich des Bleches gut erfasst wird, der möglichst nahe der Biegekante im Unterwerkzeug 4 liegt. Im erfassten Abschnitt entspricht dies dem Bereich der Lichtlinie 16, welcher unmittelbar am Übergangsabschnitt 9 anschließt, in der Darstellung ist das der waagrechte Abschnitt der Lichtlinie 16 rechts des Übergangsabschnitts 9. Da lediglich dieser Bereich rechts des Übergangsabschnitts 9 von Interesse ist, der restliche Bereich des Erfassungsbereichs 8 keine, zur Ermittlung des sich einstellenden Biegewinkels relevante Information enthält, wird dieser Teil-Erfassungsbereich 19 derart gebildet, dass der Übergangsabschnitt 9 und ein relevanter Abschnitt des Lichtmusters 13 bzw. der Lichtlinie 16 im Teil-Erfassungsbereich 19 liegt. Nach der anspruchsgemäßen Ausführung wird dieser Teil-Erfassungsbereich 19 von der Bilderfassungsvorrichtung hoch-aufgelöst erfasst. Eine Reduktion des erfassten Abbildes auf den Teil-Erfassungsbereich 19 hat einerseits den Vorteil, dass die Erfassungs- bzw. Auslesegeschwindigkeit der Bilderfassungsvorrichtung 10 deutlich höher ist, als beim Erfassen bzw. Auslesen des gesamten Erfassungsbereichs 8. Zusätzlich reduziert sich durch den kleineren Teil-Erfassungsbereich 19 auch die vom Analysemodul zu verarbeitende Datenmenge deutlich, wodurch eine hohe Verarbeitungsgeschwindigkeit erreicht werden kann. Dies wiederum ermöglicht eine sehr genaue und zeitnahe Bestimmung des aktuellen Biegewinkels und somit eine Steigerung des Durchsatzes durch die Biegemaschine.

Unter einer hohen Auflösung wird hierin verstanden, dass der Bereich des Lichtmusters 13 bzw. der Lichtlinie 16 zumindest ab dem Übergangsabschnitt 9 mit einer Auflösung von zumindest 500ppi erfasst wird. Diese Auflösung ermöglicht es, sehr genau den Verlauf der Biegelinie des Bleches im Bereich der Biegekante des Unterwerkzeugs zu bestimmen und daraus den sich einstellenden Biegewinkel und gegebenenfalls auch eine zu erwartende Rückfederung sehr genau und sehr schnell bestimmen zu können. Da ferner die Bilderfassungsvorrichtung nicht mehr in ihrer relativen Ausrichtung zum Unterwerkzeug bzw. zum Blech verschwenkt werden muss, um für unterschiedlich breite Unterwerkzeuge eingesetzt werden zu können, lässt sich eine deutliche Steigerung der erreichbaren und reproduzierbaren Genauigkeit bei der Bestimmung des Biegewinkels erzielen.

Mit dem gegenständlichen Verfahren wird somit eine Steigerung der Verarbeitungsgeschwindigkeit und somit eine Erhöhung des Durchsatzes an umzuformenden Blech erzielt. Gleichzeitig wird eine Langzeitstabilität der Biegewinkelbestimmung dadurch erreicht, dass mit einer einfach ausgebildeten Biegewinkel-Messvorrichtung reproduzierbar eine hohe Genauigkeit bei der Bestimmung des Biegewinkels erzielbar wird.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 3 ist eine weitere Ausführungsform des Biegewinkel-Messverfahrens gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Die Ausführungsbeispiele zeigen mögliche Ausführungsvarianten des Biegewinkel-Messverfahrens, wobei an dieser Stelle bemerkt sei, dass die Erfindung nicht auf die speziell dargestellten Ausführungsvarianten derselben eingeschränkt ist, solange Ausführungsvarianten sich den beigefügten Ansprüchen unterordnen lassen.

Der Ordnung halber sei abschließend darauf hingewiesen, dass zum besseren Verständnis des Aufbaus des Biegewinkel-Messverfahrens dieses bzw. deren Bestandteile teilweise unmaßstäblich und/oder vergrößert und/oder verkleinert dargestellt wurden.

### Bezugszeichenaufstellung

- 1: Biegemaschine
- 2: Biegewerkzeuganordnung
- 3: Oberwerkzeug
- 4: Unterwerkzeug
- 5: Blech
- 6: Breite
- 7: Biegewinkel-Messvorrichtung
- 8: Erfassungsbereich
- 9: Übergangsabschnitt
- 10: Bilderfassungsvorrichtung
- 11: Beleuchtungsvorrichtung
- 12: Biegeausnehmung
- 13: Lichtmuster
- 14: Unterseite
- 15: Seitenwand
- 16: Lichtlinie
- 17: Längsrichtung
- 18: Führungsvorrichtung
- 19: Teil-Erfassungsbereich

## Patentansprüche

1. Biegewinkel-Messverfahren an einer Biegemaschine (1), insbesondere Biegepresse oder Schwenkbiegemaschine, wobei die Biegemaschine (1) eine Biegewerkzeuganordnung (2) aufweist, welche Biegewerkzeuganordnung zumindest ein Oberwerkzeug (3) und ein Unterwerkzeug (4) umfasst,
wobei
• ein umzuformendes Blech (5) in die Biegewerkzeuganordnung (2) eingelegt wird;
• von einer Beleuchtungsvorrichtung (11) einer Biegewinkel-Messvorrichtung (7), ein Lichtmuster (13) auf einen Abschnitt abgegeben wird, wobei der Abschnitt einteilig ist und einen Teilbereich auf einer Seitenfläche des Unterwerkzeugs (4) und des eingelegten Blechs (5) umfasst;
• von einer Bilderfassungsvorrichtung (10) der Biegewinkel-Messvorrichtung (7), das Lichtmuster (13) am Unterwerkzeug (4) und am Blech (5) erfasst wird;
• von einem Analysemodul ein Biegewinkel aus dem erfassten Lichtmuster (13) ermittelt wird;
• vom Analysemodul im erfassten Abbild ein Übergangsabschnitt (9) zwischen Unterwerkzeug (4) und Blech (5) ermittelt wird;
**dadurch gekennzeichnet, dass**
• basierend auf dem Übergangsabschnitt (9), ein Teil-Erfassungsbereich (19) im Erfassungsbereich (8) der Bilderfassungsvorrichtung (10) ermittelt wird;
• der Teil-Erfassungsbereich (19) von der, als hoch-auflösende Kamera ausgebildeten Bilderfassungsvorrichtung (10), mit einer Auflösung im Teil-Erfassungsbereich (19) von zumindest 500ppi erfasst wird;
• und dass während der Durchführung der Biegeumformung, der sich aktuell einstellende Biegewinkel ermittelt wird;
• wobei der Biegewinkel aus der durch Reduktion des erfassten Abbildes auf den Teil-Erfassungsbereich (19) reduzierten, vom Analysemodul zu verarbeitenden Datenmenge ermittelt wird.

2. Biegewinkel-Messverfahren nach Anspruch 1, **dadurch gekennzeichnet, dass** der Übergangsabschnitt (9) aus dem erfassten Lichtmuster (13) ermittelt wird.

3. Biegewinkel-Messverfahren nach Anspruch 2, **dadurch gekennzeichnet, dass** von der Beleuchtungsvorrichtung (11) eine Lichtlinie (16) abgegeben wird.

4. Biegewinkel-Messverfahren nach Anspruch 2 oder 3, **dadurch gekennzeichnet, dass** der Übergangsabschnitt (9) durch Finden einer Unstetigkeit der Geometrie im erfassten Lichtmuster (13) ermittelt wird.

5. Biegewinkel-Messverfahren nach einem der Ansprüche 1 bis 4, **dadurch gekennzeichnet, dass** der Übergangsabschnitt (9) basierend auf einer hinterlegten oder ermittelten Kennung des Unterwerkzeugs (4) ermittelt wird.

6. Biegewinkel-Messverfahren nach Anspruch 5, **dadurch gekennzeichnet, dass** eine am Unterwerkzeug (4) angebrachte Werkzeugkennung von der Bilderfassungsvorrichtung (10) ausgelesen wird.

7. Biegewinkel-Messverfahren nach einem der Ansprüche 1 bis 6, **dadurch gekennzeichnet, dass** der Teil-Erfassungsbereich (19) so gebildet wird, dass der Übergangsabschnitt (9) im Randbereich des Teil-Erfassungsbereichs (19) liegt.

8. Biegewinkel-Messverfahren nach einem der Ansprüche 1 bis 7, **dadurch gekennzeichnet, dass** die Biegewinkel-Messvorrichtung (7) längs des Unterwerkzeugs (4) verschoben wird.

9. Biegemaschine (1), insbesondere Biegepresse oder Schwenkbiegemaschine, wobei die Biegemaschine (1) eine Biegewerkzeuganordnung (2) aufweist, welche Biegewerkzeuganordnung (2) zumindest ein Oberwerkzeug (3) und ein Unterwerkzeug (4) umfasst;
wobei die Biegemaschine (1) eine Biegewinkel-Messvorrichtung (7) umfasst, welche Biegewinkel-Messvorrichtung (7) eine Beleuchtungsvorrichtung (11), eine Bilderfassungsvorrichtung (10) und ein Analysemodul umfasst;
wobei die Bilderfassungsvorrichtung (10) zur Erfassung des von der Beleuchtungsvorrichtung (11) auf das Unterwerkzeug (4) und auf das umzuformende Blech (5) abgegebenen Lichtmusters (13) ausgebildet ist und das Analysemodul zur Ermittlung eines Biegewinkels aus dem erfassten Lichtmuster (13) ausgebildet ist; **dadurch gekennzeichnet, dass** die Bilderfassungsvorrichtung (10) als hoch-auflösende Kamera, mit einer Auflösung in einem Teil-Erfassungsbereich (19) von zumindest 500ppi, ausgebildet ist;
und das Analysemodul zur Verarbeitung einer durch Reduktion des erfassten Abbildes auf den Teil-Erfassungsbereich (19) reduzierten Datenmenge ausgebildet ist.

## Claims

1. A bending angle measuring method on a bending machine (1), in particular a bending press or a swivel bending machine, wherein the bending machine (1) comprises a bending tool arrangement (2), said bending tool arrangement comprising at least one upper tool (3) and one lower tool (4),
wherein
• a sheet metal (5) to be formed is inserted into the bending tool arrangement (2);
• a light pattern (13) is emitted onto a section by means of a lighting device (11) of a bending angle measuring device (7), wherein the section is formed as a single part and covers a sub-region on a lateral surface of the lower tool (4) and the inserted sheet metal (5);
• the light pattern (13) on the lower tool (4) and on the sheet metal (5) is detected by an image detecting device (10) of the bending angle measuring device (7);
• a bending angle is determined from the detected light pattern (13) by an analysis module;
• in the detected image, a transition (9) between the lower tool (4) and the sheet metal (5) is determined by the analysis module;
**characterized in that**
• based on the transition portion (9), a sub-detection region (19) in the detection range (8) of the image detecting device (10) is determined;
• the sub-detection region (19) is detected by the image detecting device (10) designed as a high-resolution camera with a resolution of at least 500ppi in the sub-detection region (19);
• and **in that** during the bend-forming, the currently adjusting bending angle is determined;
• wherein the bending angle is determined from the amount of data to be processed by the analysis module reduced to the sub-detection region (19) by reduction of the detected image.

2. The bending angle measuring method according to claim 1, **characterized in that** the transition portion (9) is determined from the detected light pattern (13).

3. The bending angle measuring method according to claim 2, **characterized in that** a light line (16) is emitted by the lighting device (11).

4. The bending angle measuring method according to claim 2 or 3, **characterized in that** the transition portion (9) is determined by finding a discontinuity of the geometry in the detected light pattern (13).

5. The bending angle measuring method according to one of claims 1 to 4, **characterized in that** the transition portion (9) is determined on the basis of a code of the lower tool (4) that is stored or determined.

6. The bending angle measuring method according to claim 5, **characterized in that** a tool code applied to the lower tool (4) is read by the image detecting device (10).

7. The bending angle measuring method according to one of claims 1 to 6, **characterized in that** the sub-detection region (19) is designed such that the transition portion (9) is located in the peripheral region of the sub-detection region (19).

8. The bending angle measuring method according to one of claims 1 to 7, **characterized in that** the bending angle measuring device (7) is displaced along the lower tool (4).

9. A bending machine (1), in particular a bending press or a swivel bending machine,
wherein the bending machine (1) comprises a bending tool arrangement (2), said bending tool arrangement (2) comprising at least one upper tool (3) and one lower tool (4);
wherein the bending machine (1) comprises a bending angle measuring device (7), said bending angle measuring device (7) comprising a lighting device (11), an image detecting device (10) and an analysis module;
wherein the image detecting device (10) is designed for detecting the light pattern (13) emitted by the lighting device (11) onto the lower tool (4) and onto the sheet metal (5) to be formed and the analysis module is designed for determining a bending angle from the detected light pattern (13);
**characterized in that**
the image detecting device (10) is designed as a high-resolution camera with a resolution of at least 500ppi in a sub-detection region (19);
and the analysis module is designed for processing an amount of data reduced to the sub-detection region (19) by reduction of the detected image.

## Revendications

1. Procédé de mesure d'angle de pliage sur une machine de pliage (1), plus particulièrement une presse plieuse ou une machine de pliage pivotante, la machine de pliage (1) comprenant une disposition d'outils de pliage (2), cette disposition d'outils de pliage comprenant au moins un outil supérieur (3) et un outil inférieur (4),
• une tôle (5) à former étant insérée dans la disposition d'outils de pliage (2) ;
• un dispositif d'éclairage (11) d'un dispositif de mesure d'angle de pliage (7) émettant un motif lumineux (13) sur une portion, cette portion étant formée d'une seule pièce et comprenant une partie sur une surface latérale de l'outil inférieur (4) et de la tôle (5) insérée ;
• un dispositif de détection d'image (10) du dispositif de mesure d'angle de pliage (7) détectant le motif lumineux (13) sur l'outil inférieur (4) et sur la tôle (5) ;
• un module d'analyse déterminant un angle de pliage à partir du motif lumineux (13) détecté ;
• le module d'analyse déterminant, dans l'image détectée, une portion de transition (9) entre l'outil inférieur (4) et la tôle (5) ;
**caractérisé en ce que**
• sur la base de la portion de transition (9), une zone de détection partielle (19) est déterminée dans la zone de détection (8) du dispositif de détection d'image (10) ;
• la zone de détection partielle (19) est détectée par le dispositif de détection d'image (10) conçu comme une caméra à haute résolution, avec une résolution, dans la zone de détection partielle (19), d'au moins 500 ppi ;
• et **en ce que**, pendant l'exécution du formage par pliage, l'angle de pliage actuel est déterminé ;
• l'angle de pliage étant déterminé à partir de la quantité de données à traiter par le module d'analyse, réduite par la réduction de l'image détectée sur la zone de détection partielle (19).

2. Procédé de mesure d'angle de pliage selon la revendication 1, **caractérisé en ce que** la portion de transition (9) est déterminée à partir du motif lumineux (13) détecté.

3. Procédé de mesure d'angle de pliage selon la revendication 2, **caractérisé en ce que** le dispositif d'éclairage (11) émet une ligne lumineuse (16).

4. Procédé de mesure d'angle de pliage selon la revendication 2 ou 3, **caractérisé en ce que** la portion de transition (9) est déterminée en trouvant une discontinuité de la géométrie dans le motif lumineux (13) détecté.

5. Procédé de mesure d'angle de pliage selon l'une des revendications 1 à 4, **caractérisé en ce que** la portion de transition (9) est déterminée sur la base d'un identifiant enregistré ou déterminé de l'outil inférieur (4).

6. Procédé de mesure d'angle de pliage selon la revendication 5, **caractérisé en ce qu'**un identifiant d'outil apposé sur l'outil inférieur (4) est lu par le dispositif de détection d'image (10).

7. Procédé de mesure d'angle de pliage selon l'une des revendications 1 à 6, **caractérisé en ce que** la zone de détection partielle (19) est formée de façon à ce que la portion de transition (9) se trouve sur le bord de la zone de détection partielle (19).

8. Procédé de mesure d'angle de pliage selon l'une des revendications 1 à 7, **caractérisé en ce que** le dispositif de mesure d'angle de pliage (7) est déplacé le long de l'outil inférieur (4).

9. Machine de pliage (1), plus particulièrement presse plieuse ou machine de pliage pivotante, la machine de pliage (1) comprenant une disposition d'outils de pliage (2), cette disposition d'outils de pliage (2) comprenant au moins un outil supérieur (3) et un outil inférieur (4) ;
la machine de pliage (1) comprenant un dispositif de mesure d'angle de pliage (7), ce dispositif de mesure d'angle de pliage (7) comprenant un dispositif d'éclairage (11), un dispositif de détection d'image (10) et un module d'analyse ;
le dispositif de détection d'image (10) étant conçu pour la détection du motif lumineux (13) émis par le dispositif d'éclairage (11) sur l'outil inférieur (4) et sur la tôle (5) à former et le module d'analyse étant conçu pour la détermination d'un angle de pliage à partir du motif lumineux (13) détecté ;
**caractérisé en ce que**
le dispositif de détection d'image (10) est conçu comme une caméra à haute résolution, avec une résolution, dans une zone de détection partielle (19), d'au moins 500 ppi ;
et le module d'analyse est conçu pour le traitement de la quantité de données réduite par la réduction de l'image détectée sur la zone de détection partielle (19).
